(19) Europäisches Patentamt
European Patent Office
Office européen des brevets

(11) **EP 2 916 928 B1**

(12) **EUROPÄISCHE PATENTSCHRIFT**

(45) Veröffentlichungstag und Bekanntmachung des Hinweises auf die Patenterteilung:
**26.10.2016 Patentblatt 2016/43**

(21) Anmeldenummer: **13770432.6**

(22) Anmeldetag: **24.09.2013**

(51) Int Cl.:
***B01D 39/16*** (2006.01)          ***B01D 39/18*** (2006.01)

(86) Internationale Anmeldenummer:
**PCT/EP2013/069802**

(87) Internationale Veröffentlichungsnummer:
**WO 2014/072117 (15.05.2014 Gazette 2014/20)**

(54) **FLAMMHEMMEND AUSGERÜSTETES GASFILTERMATERIAL MIT HOHER STAUBSPEICHERFÄHIGKEIT**

FLAME-RETARDANT GAS FILTER MATERIAL HAVING HIGH DUST STORAGE CAPACITY

MATÉRIAU FILTRANT IGNIFUGÉ À HAUTE CAPACITÉ D'ACCUMULATION DE POUSSIÈRES POUR LA FILTRATION DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2012 DE 102012220546**

(43) Veröffentlichungstag der Anmeldung:
**16.09.2015 Patentblatt 2015/38**

(73) Patentinhaber: **Neenah Gessner GmbH 83052 Bruckmühl (DE)**

(72) Erfinder:
• **DEMMEL, Andreas 83620 Feldkirchen-Westerham (DE)**
• **HÖRL, Werner 83620 Feldkirchen-Westerham (DE)**

(74) Vertreter: **Hoffmann Eitle Patent- und Rechtsanwälte PartmbB Arabellastraße 30 81925 München (DE)**

(56) Entgegenhaltungen:
EP-A1- 2 206 544      DE-A1- 2 723 528
US-A1- 2008 022 645

• DATABASE WPI Week 200839 Thomson Scientific, London, GB; AN 2008-G13800 XP002720682, & JP 2008 013858 A (KURASHIKI SENI KAKO KK) 24. Januar 2008 (2008-01-24)
• DATABASE WPI Week 200882 Thomson Scientific, London, GB; AN 2008-O10557 XP002720683, & JP 2008 279442 A (DAIWA CHEM CO LTD) 20. November 2008 (2008-11-20)

**Beschreibung**

Die Erfindung betrifft ein flammhemmend ausgerüstetes Filtermaterial mit hoher Staubspeicherfähigkeit, das insbesondere zur Abtrennung von flüssigen und festen Verunreinigungen aus Gasen geeignet ist.

**Stand der Technik**

Die Verwendung von flammhemmend ausgerüsteten Filtermaterialien zur Filtration von Gasen erlangt in den meisten Bereichen der Gasfiltration immer mehr Bedeutung. Die Luftfiltermaterialien zur Filtration der Verbrennungsluft in den meisten Personenkraftfahrzeugen sind bereits flammhemmend ausgerüstet, damit zum Beispiel eine angesaugte, noch brennende Zigarette keinen Fahrzeugbrand verursachen kann. Aber auch im häuslichen Bereich spielen flammhemmend ausgerüstete Filtermaterialien eine große Rolle, wie zum Beispiel bei der Filtration von Ansaugluft bei Klimaanlagen oder bei Dunstabzugshauben über Kochstellen.

Flammhemmend ausgerüstete Filtermaterialien sind seit langem bekannt. Eine Möglichkeit der Herstellung von flammhemmenden Filtermaterialien besteht in einer entsprechenden Auswahl von nicht brennbaren Rohstoffen, wie zum Beispiel halogenhaltiger Fasern, anorganische Fasern, keramischer Partikel für Sinterfilter oder Kunststofffasern, in die ein Flammschutzmittel bereits mit eingearbeitet ist. Ein Luftfiltermedium aus halogenierten Fasern ist zum Beispiel aus der GB 1406431 A bekannt.

Eine andere Möglichkeit besteht in einer nachträglichen flammhemmenden Behandlung des fertigen Filtermaterials. Diese Variante ist meist kostengünstiger und erlaubt den Einsatz von wesentlich mehr unterschiedlichen Rohstoffen für die Herstellung des Filtermaterials. Nachdem viele Filtermaterialien zur Verbesserung der Steifigkeit, Festigkeit und Beständigkeit noch mit einer Kunstharzlösung oder Dispersion imprägniert werden, wird das Flammschutzmittel üblicherweise in das Imprägniermittel mit eingearbeitet. Dadurch wird es auch nach längerem Kontakt mit feuchtem oder gar nassem Gas nicht so leicht aus dem Filtermaterial ausgewaschen wie separat aufgebrachtes Flammschutzmittel. Nachdem die meisten Flammschutzmittel im trockenen Zustand in Form von Partikeln vorliegen, die keine feste Verbindung mit dem Filtermaterial eingehen, können sie durch das Imprägniermittel an das Filtermaterial gebunden werden. Flammschutzmittel, die für eine Zugabe zu den üblichen Imprägniermitteln geeignet sind, sind zum Beispiel halogenhaltige organische Verbindungen, Silicone, phosphorhaltige Verbindungen, stickstoffhaltige Verbindungen, borhaltige Verbindungen, Metalloxide, Metallhydrate und Graphit. Ein Beispiel für ein Filtermaterial mit einer flammhemmenden Imprägnierung ist das Filtermaterial L4-6i27SGF2 der Firma NEENAH Gessner, Bruckmühl. Dieses Filtermaterial hat sich seit vielen Jahren als Luftfiltermaterial für die Ansaugluft von Verbrennungsmotoren weltweit bewährt.

Für viele Anwendungen reicht die Staubspeicherfähigkeit von vollständig durchimprägnierten Filtermaterialien nicht mehr aus. Eine Möglichkeit, die Staubspeicherfähigkeit von imprägnierten Filtermaterialien zu erhöhen, ist ein einseitiger Imprägniermittelauftrag. Der Vorteil dieser Filtermaterialien liegt in ihrer sehr offenen Oberfläche und somit sehr hohen Staubspeicherfähigkeit der nicht imprägnierten Seite und ihrer Festigkeit, Steifigkeit und Beständigkeit durch die imprägnierte Gegenseite. Die Verwendung einseitig imprägnierter Filtermaterialien ist seit langem bekannt und wird zum Beispiel in der DE 19752143 A1 in einer bevorzugten Ausführungsform beschrieben.

Diese Filtermaterialien haben jedoch den Nachteil, dass die nicht imprägnierte Seite nicht flammhemmend ist, besonders wenn zum Beispiel Zellulose oder Synthesefasern als Rohstoff verwendet werden. Daher wurde versucht, auch solche Filtermaterialien flammhemmend auszurüsten.

Die Einarbeitung von halogen- oder borhaltigen Flammschutzmitteln in die Imprägnierung hat eine flammhemmende Wirkung auf das gesamte Filtermaterial, also auch auf die nicht imprägnierte Seite. Im Brandfall spalten aber halogenierte und borhaltige Substanzen giftige Zersetzungsprodukte ab und sind daher unerwünscht.

Es besteht daher ein dringender Bedarf an einem Filtermaterial, das einen hohen Abscheidegrad, eine hohe Staubspeicherfähigkeit und flammhemmende Wirkung besitzt, ohne im Brandfall giftige Zersetzungsprodukte freizusetzen.

In US 2008/0022645 A1 werden Filtermedien beschrieben. Diese können mit Bindemitteln imprägniert sein und Flammschutzmittel enthalten. In den Beispielen werden die Fasern beidseitig mit einer Mischung aus einem EthylenVinylacetat-Latexbindemittel (AIR-FLEX®-192), dem Flammschutzmittel Flovan® CGN und einem Aminosiloxan besprüht.

Die DE 27 23 528 A1 befasst sich mit einseitig imprägnierten Filtermaterialien, die keine Flammschutzmittel enthalten. Bei der Herstellung können die Fasern gleichmäßig mit einem Nassfestigkeit verleihenden Harz imprägniert werden.

**Zusammenfassung der Erfindung**

Die Aufgabe wird erfindungsgemäß durch ein einseitig, mit Bindemitteln imprägniertes Filtermaterial gelöst, das eine nicht mit Bindemittel imprägnierte Seite umfasst, die ein halogen- und borfreies Flammschutzmittel enthält.

**Detaillierte Beschreibung der Erfindung**

Das erfindungsgemäße Filtermaterial umfasst bevorzugt zumindest ein Material ausgewählt aus der Gruppe bestehend aus nassgelegten Vliesen, trockengelegten Vliesen, Geweben und Schäumen.

Unter den trockengelegten Vliesen sind u.a. trockengelegte Faservliese, Meltblownvliese und Spinnvliese zu verstehen.

Trockengelegte Faservliese bestehen aus Fasern mit endlicher Länge. Zur Herstellung von trockengelegten Faservliesen können sowohl natürliche als auch synthetische Fasern zum Einsatz kommen. Beispiele für natürliche Fasern sind Zellulose, Wolle, Baumwolle und Flachs. Synthetische Fasern sind zum Beispiel Polyolefinfasern, Polyesterfasern, Polyamidfasern, Polytetrafluorethylenfasern und Polyphenylensulfidfasern. Die eingesetzten Fasern können entweder gerade oder gekräuselt sein. Die trockengelegten Faservliese können auch luftgelegte Faservliese sein. Zur Verfestigung kann das trockengelegte Faservlies ein- oder mehrkomponentige Schmelzbindefasern enthalten, die bei einer Temperatur unterhalb der Schmelztemperatur der anderen Fasern ganz oder teilweise aufschmelzen und das Vlies verfestigen. Die Herstellung der trockengelegten Faservliese erfolgt nach dem bekannten Stand der Technik wie in im Buch "Vliesstoffe, W. Albrecht, H. Fuchs, W. Kittelmann, Wiley-VCH, 2000" beschrieben. Die trockengelegten Faservliese können durch die bereits erwähnten ein- oder mehrkomponentigen Schmelzbindefasern verfestigt werden. Weitere Verfestigungsmöglichkeiten sind zum Beispiel Vernadeln, Wasserstrahlvernadeln oder das Tränken oder Besprühen des Vlieses mit flüssigen Bindern mit anschließender Trocknung.

Meltblownvliese bestehen aus polymeren Endlosfasern. Zur Herstellung der Meltblownvliese für das erfindungsgemäße Filtermaterial wird der in der Fachwelt bekannte Meltblownprozess verwendet, wie er z.B. in Van A. Wente, "Superfine Themoplastic Fibers", Industrial Engineering Chemistry, Vol. 48, S.1342 - 1346 beschrieben ist. Geeignete Polymere sind zum Beispiel Polyethylentherephtalat, Polybutylentherephtalat, Polyethylennaphtalat, Polybutylennaphtalat, Polyamid, Polyphenylensulfid und Polyolefine. Die typischen Faserdurchmesser bewegen sich dabei bevorzugt zwischen 0,5 - 10 μm und besonders bevorzugt zwischen 0,5 - 3 μm. Den Polymeren können je nach Anforderungen noch Additive, wie zum Beispiel Hydrophilierungsmittel, Hydrophobierungsmittel, Kristallisationsbeschleuniger oder Farben, zugemischt werden. Je nach Anforderung kann die Oberfläche der Meltblownvliese durch Oberflächenbehandlungsverfahren, wie zum Beispiel Coronabehandlung oder Plasmabehandlung, in ihrer Eigenschaft verändert werden.

Spinnvliese bestehen ebenfalls aus polymeren Endlosfasern, deren Faserdurchmesser aber meistens deutlich größer ist als der von Meltblownfasern. Spinnvliese werden nach dem der Fachwelt bekannten Spinnvliesverfahren hergestellt, wie es zum Beispiel in den Patentschriften US 4,340,563 A, US 3,802,817 A, US 3,855,046 A und US 3,692,618 A beschrieben ist. Für das Spinnvliesverfahren geeignete Polymere sind z.B. Polyethylentherephtalat, Polybutylentherephtalat, Polyethylennaphtalat, Polybutylennaphtalat, Polyamid, Polyphenylensulfid und Polyolefine.

Unter Schäumen sind alle offenzelligen Schäume aus organischen Polymeren zu verstehen. Durch ihre offenzellige Struktur sind sie luftdurchlässig und eignen sich für verschiedenste Filtrationsaufgaben. Die Herstellung geeigneter Schäume ist beispielhaft in den Schriften US 3 171 820 A, DE 1504551 A, DE 601435 A und GB 1111928 A beschrieben.

Nassgelegte Vliese im Sinne dieser Erfindung sind alle Vliese, die mit den in der Fachwelt bekannten Nasslegeprozessen zur Herstellung von Filtermaterialien erzeugt werden können. Die Materialien für das erfindungsgemäße Filtermaterial bestehen bevorzugt aus natürlichen, synthetischen, anorganischen Fasern oder einer Mischung daraus. Beispiele für natürliche Fasern sind Zellulose, Baumwolle, Wolle und Hanf, wobei das eingesetzte Zellulosematerial holzfreie und/oder holzhaltige Zellulosen von Nadel- und/oder Laubbäumen, Regeneratzellulosen und fibrillierte Zellulosen sein kann. Anorganische Fasern sind zum Beispiel Glasfaser, Basaltfasern, Quarzfasern und Metallfasern. Als Synthesefasern eignen sich zum Beispiel Polyesterfasern, Polypropylenfasern, Mehrkomponentenfasern mit unterschiedlichen Schmelzpunkten der einzelnen Komponenten, Polyamidfasern und Polyacrylnitrilfasern. Der Titer der Synthesefasern beträgt typischerweise 0,1 dtex - 8,0 dtex, besonders bevorzugt 0,5 dtex - 5 dtex und die Schnittlänge typischerweise 3 mm - 20 mm, besonders bevorzugt 4 mm bis 12 mm. Die Materialien für das erfindungsgemäße Filtermaterial können zu 100% aus natürlichen, synthetischen oder anorganischen Fasern bestehen, es ist aber auch jede beliebige Mischung aus diesen Faserarten möglich. Die richtige Zusammensetzung weiß der Fachmann auf Grund seines Wissens und seiner Erfahrung je nach den geforderten Materialeigenschaften gezielt auszuwählen. Eine Materiallage kann aus mehreren Schichten bestehen, die entweder in einer Papiermaschine mit einem dazu geeigneten Stoffauflauf erzeugt und zusammengeführt werden oder aus einzelnen Papierbahnen, die aus Filtermaterialien bestehen und in einem separaten Arbeitsgang miteinander verbunden werden. Die einzelnen Schichten können dabei in ihren Eigenschaften unterschiedlich ausgestaltet sein.

In einer bevorzugten Ausführungsform ist das erfindungsgemäße Filtermaterial ein Filtermaterial auf Papierbasis. Das heißt, dass das Filtermaterial in dieser Ausführungsform aus Zellulose(fasern) und optional zusätzlich aus synthetischen Fasern, insbesondere Polyesterfasern besteht. Dabei haben die synthetischen Fasern, insbesondere die die Polyesterfasern, bevorzugt 0,3 - 8,0 dtex und 3 - 12 mm Schnittlänge. Gemäß einer besonders bevorzugten Ausführungsform besteht das erfindungsgemäße Filtermaterial auf Papierbasis aus Zellulose(fasern) zusammen mit 0 - 50 Gew.% Polyesterfasern mit 0,3 - 8,0 dtex und 3 - 12 mm Schnittlänge bezogen auf 100% des nicht imprägnierten Filtermaterials. In dieser Ausführungsform besitzt das Filtermaterial bevorzugt eine Flächenmasse von 60 - 250 g/m$^2$, eine Dicke von 0,2 - 2,2 mm, eine Luftdurchlässigkeit von 50 - 3000 1/m$^2$s und eine Porosität von 70 - 95 %. Die Porosität ist dabei als das Verhältnis der tatsächlichen Dichte des Filtermediums zu der durchschnittlichen Dichte der eingesetzten Fasern definiert.

In einer weiteren bevorzugten Ausführungsform besteht das erfindungsgemäße Filtermaterial aus 5 - 25 Gew.% Schmelzbindefasern mit 0,5 - 8,0 dtex und 3 - 12 mm Schnittlänge und 70 - 90 Gew.% Polyesterfasern mit 0,3 - 8,0 dtex und 3 - 12 mm Schnittlänge bezogen auf 100% des nicht imprägnierten Filtermaterials. In dieser Ausführungsform besitzt das Filtermaterial bevorzugt eine Flächenmasse von 30 - 300 g/m$^2$, eine Dicke von 0,2 - 2,2 mm, eine Luftdurchlässigkeit von 50 - 3000 1/m$^2$s und eine Porosität von 70 - 95 %.

Die Erfindung ist nicht auf die angegebenen Ausführungen beschränkt. Im Rahmen der Erfindung ist es ohne weiteres möglich, dass das erfindungsgemäße Filtermaterial aus mehreren Lagen bzw. Schichten besteht. Weiterhin ist es auch möglich, dass vor und/oder nach dem erfindungsgemäßen Filtermaterial eine oder mehrere Lagen aus anderen Materialien vorgesehen sind, falls hierdurch die flammhemmende Wirkung nicht oder zu mindestens nicht wesentlich beeinflusst wird.

So kann das erfindungsgemäße Filtermaterial zum Beispiel eine Vorfilterlage aus einem Meltblownvlies, einem Spinnvlies, einem trockengelegten Stapelfaservlies, einem nassgelegten Vlies, einem Glasfaservlies, einem Gewebe oder einem Schaum besitzen. Die Vorfilterlage befindet sich auf der Anströmseite des Filtermaterials. Der Begriff Anströmseite bezeichnet dabei die Seite des Filtermaterials, von der aus die zu filtrierende Mischung durch das Filtermaterial geleitet wird.

In einer bevorzugten Ausführungsform besteht die Vorfilterlage des erfindungsgemäßen Filtermaterials aus einem Meltblownvlies mit einer Flächenmasse von 8 g/m$^2$ - 120 g/m$^2$, einer Dicke von 0,1 mm - 1,5 mm und einer Luftdurchlässigkeit von 1000 1/m$^2$s - 5000 l/m$^2$s.

Das erfindungsgemäße Filtermaterial ist auf einer Seite mit einem Bindemittel imprägniert, so dass die gegenüberliegende Seite frei von Bindemittel ist. In dieser Anmeldung wird das Bindemittel gelegentlich auch als "Imprägniermittel" bezeichnet. Unter der imprägnierten Seite wird der Teil des Filtermaterials verstanden, der durch die Oberfläche des Filtermaterials begrenzt ist, auf der das Bindemittel aufgetragen ist. Die gegenüberliegende Seite bezeichnet den Teil des Filtermaterials, der durch eine Oberfläche begrenzt ist, die der Oberfläche der imprägnierten Seite gegenüberliegt und kein Bindemittel enthält. Vorzugsweise ist das erfindungsgemäße Filtermaterial flächig, d.h. es besitzt zwei gegenüberliegende Oberflächen, die besonders bevorzugt parallel zu einander angeordnet sind.

Das Bindemittel wird durch Imprägnieren auf das Filtermaterial aufgetragen und durchdringt zumindest einen Teil des Filtermaterials. Dabei bleibt die imprägnierte Oberfläche des Filtermaterials insbesondere für Gase durchlässig.

Sollte das erfindungsgemäße Filtermaterial eine offenere und eine dichtere Seite besitzen, so wird die Imprägnierung bevorzugt auf der dichteren Seite aufgebracht. Die dichtere Seite unterscheidet sich von der offeneren Seite durch eine kleinere durchschnittliche Porengröße, wobei die durchschnittliche Porengröße der dichteren Seite bevorzugt mindestens 5 %, mehr bevorzugt mindestens 10 % und besonders bevorzugt mindestens 20 % kleiner ist als die der offeneren Seite.

Als Bindemittel kommen die für Filtermaterialien bekannten Substanzen zur Anwendung, wie zum Beispiel Phenolharze oder Epoxidharze aus alkoholischen Lösungen, aber auch wässrige Dispersionen zum Beispiel von Acrylaten, Styrol-Butadienen, Polyvinylacetaten, Polyurethane, Phenolharzen oder Mischungen daraus. Eine weitere mögliche Klasse von Bindemittel sind wässrige Lösungen von zum Beispiel Polyvinylalkohol, Melaminharz oder Harnstoffharz. Neben den flüssigen Bindemitteln können auch feste, pulverförmige Binder aus thermoplastischen Polymeren zum Einsatz kommen.

Je nach Bedarf können dem Bindemittel noch verschiedene Hilfsstoffe zugemischt werden, wie zum Beispiel Hydrophilierungsmittel, Hydrophobierungsmittel oder Farben.

Die Imprägnierung erfolgt nach dem bekannten Stand der Technik durch zum Beispiel Sprühen, Walzenauftrag, Schaumauftrag oder Bestauben. Der typische Anteil des trockenen Imprägniermittels am Gesamtgewicht des Filtermaterials beträgt 0,5 - 50 Gew.%, bevorzugt 5 - 35 Gew.%. Der Anteil des trocknen Imprägniermittels bezieht sich im Sinne der Erfindung auf den Anteil des Imprägniermittels im Filtermaterial, das für 30 Minuten bei 100 °C in einem Umlufttrockenschrank getrocknet wurde.

Die nicht imprägnierte Seite des erfindungsgemäßen Filtermaterials enthält ein halogen- und borfreies Flammschutzmittel. Die nicht imprägnierte Seite stellt dabei den Teil des Filtermaterials dar, der durch eine Oberfläche begrenzt ist, die der Oberfläche der imprägnierten Seite gegenüberliegt. Bevorzugt sind die imprägnierte Oberfläche und die nicht imprägnierte Oberfläche im erfindungsgemäßen Filtermaterial parallel zu einander angeordnet. Optional kann auch die imprägnierte Seite ein halogen- und borfreies Flammschutzmittel enthalten. Demnach enthält gemäß einer bevorzugten Ausführungsform des erfindungsgemäßen Filtermaterials nur die nicht imprägnierte Seite ein halogen- und borfreies Flammschutzmittel.

Das halogen- und borfreie Flammschutzmittel kann eine stickstoffhaltige Komponente und/oder eine phosphorhaltige Komponente umfassen. Beispiele für stickstoffhaltige Komponenten sind Harnstoff, Harnstoffverbindungen und Guanidinverbindungen. Beispiele für phosphorhaltige Komponenten sind Phosphorsäureester und deren Salze, Phosphonsäureester und deren Salze, Phosphinsäureester (Phosphor(I)-säureester) und deren Salze (z.B. 9,10-Dihydro-9-oxa-10-phosphaphenanthren-10-oxid und dessen Derivate), Phosphate und Polyphosphate, wobei Phosphorsäureester und deren Salze, Phosphonsäureester und deren Salze und DOPO und dessen Derivate bevorzugt sind.

Im Hinblick auf die Staubspeicherfähigkeit des Filtermaterials ist es vorteilhaft, das Flammschutzmittel direkt auf der Faser, also ohne Bindemittel, zu fixieren. Das wird bevorzugt durch Bindung des Flammschutzmittels an die Faseroberfläche, wobei mit der Faseroberfläche die Oberfläche der im Filtermaterial enthaltenen Fasern gemeint ist, oder durch ein schwer lösliches halogen- und borfreies Flammschutzmittel erreicht. Dadurch wird vorteilhaft erreicht, dass das halogen- und borfreie Flammschutzmittel nicht auswaschbar ist.

Schwer löslich bedeutet im Sinne der vorliegenden Anmeldung, dass die Löslichkeit des Flammschutzmittels in destilliertem Wasser von 20 °C bevorzugt bei höchstens 3,5 Gew.%, besonders bevorzugt bei höchstens 3,0 Gew.% und ganz besonders bevorzugt bei höchstens 2,5 Gew.%, bezogen auf 100 Gew.% der Summe aus dem Gewicht des Wassers und des Flammschutzmittels, liegt.

Die Bindung kann über geeignete reaktive Gruppen erfolgen, die in dem halogen- und borfreien Flammschutzmittel, insbesondere in der stickstoff- und/oder phosphorhaltige Komponente des Flammschutzmittels, enthalten sind, wobei vorzugsweise die stickstoffhaltige Komponente geeignete reaktive Gruppen umfasst. Als reaktive Gruppen eignen sich zum Beispiel Methylol- und/oder Aldehydgruppen. Geeignete stickstoffhaltige Komponenten, die die reaktiven Gruppen enthalten, sind zum Beispiel Methylol-Harnstoff, Methylol-Melamin-Formaldehyd und Umsetzungsprodukte von Harnstoffverbindungen, Guanidinverbindungen oder Dicyandiamid mit mehrfunktionellen Verbindungen wie z.B. Glyoxal oder Glutardialdehyd. Dabei kann das Flammschutzmittel in einem Lösungsmittel, z.B. Methanol oder Wasser, als Lösung oder Dispersion auf das Filtermaterial aufgesprüht werden. Beim Verdampfen des Lösungsmittels bildet sich eine Bindung zwischen dem Flammschutzmittel und der Faseroberfläche der im Filtermaterial enthaltenen Fasern.

Vorzugsweise enthält das halogen- und borfreie Flammschutzmittel neben der stickstoffhaltigen Komponente mit reaktiven Gruppen eine phosphorhaltige Komponente. Diese kann aus der Gruppe der phosphorhaltigen Verbindungen so ausgewählt sein, dass sie entweder mit der stickstoffhaltigen Komponente zu in Wasser schwerlöslichen Verbindungen reagiert oder von Haus aus in Wasser schwer löslich ist. Die Löslichkeit der schwer löslichen phosphorhaltigen Komponente in destilliertem Wasser von 20 °C liegt dabei bevorzugt bei höchstens 3,5 Gew.%, besonders bevorzugt bei höchstens 3,0 Gew.% und ganz besonders bevorzugt bei höchstens 2,5 Gew.%, bezogen auf 100 Gew.% der Summe aus dem Gewicht des Wassers und der phosphorhaltigen Komponente. Besonders bevorzugt ist die phosphorhaltige Komponente ausgewählt aus der Gruppe bestehend aus: Phosphorsäureester und deren Salzen, Phosphonsäureester und deren Salzen und DOPO (9,10-Dihydro-9-oxa-10phosphaphenanthren-10-oxid) und dessen Derivaten.

Das halogen- und borfreie Flammschutzmittel kann nach im Stand der Technik bekannten Methoden aufgetragen werden, zum Beispiel durch Sprühen, Walzenauftrag, Schaumauftag oder Bestauben. Der typische Anteil des trockenen halogen- und borfreien Flammschutzmittels am Gesamtgewicht des Filtermaterials beträgt 0,5 - 50 Gew.%, bevorzugt 10 - 30 Gew.%. Der Anteil des trocknen Flammschutzmittels bezieht sich im Sinne der Erfindung auf den Anteil des Flammschutzmittels im Filtermaterial, das für 30 Minuten bei 100 °C in einem Umlufttrockenschrank getrocknet wurde.

Das erfindungsgemäße Filtermaterial hat vorzugsweise eine Flächenmasse von 30 - 300 $g/m^2$, besonders bevorzugt von 60 $g/m^2$ - 250 $g/m^2$ und ganz besonders bevorzugt von 90 $g/m^2$ - 180 $g/m^2$. Die Dicke des erfindungsgemäßen Filtermaterials ist bevorzugt von 0,2 mm - 2,2 mm, besonders bevorzugt von 0,4 mm - 1,5 mm und ganz besonders bevorzugt von 0,45 mm - 1,0 mm. Dabei bezieht sich die Dicke des erfindungsgemäßen Filtermaterials auf die Distanz zwischen der Oberfläche auf der das Bindemittel aufgetragen ist und der gegenüberliegenden Oberfläche. Die Luftdurchlässigkeit ist vorzugsweise von 20 $l/m^2s$ - 3000 $l/m^2s$, mehr bevorzugt von 30 $l/m^2s$ - 1600 $l/m^2s$, besonders bevorzugt von 50 $l/m^2s$ - 1000 $1/m^2s$ und ganz besonders bevorzugt von 100 $l/m^2s$ - 500 $l/m^2s$. Die Porosität des erfindungsgemäßen Filtermaterials ist bevorzugt von 70 - 95 % und besonders bevorzugt von 75 % - 90 %. Im erfindungsgemäßen Filtermaterial ist der Abscheidegrad nach ISO 5011 bevorzugt mindestens 90 %, mehr bevorzugt mindestens 95 % und ganz besonders bevorzugt mindestens 99 %. Die Staubspeicherfähigkeit nach ISO 5011 ist vorzugsweise mindestens 1,0 $g/200cm^3$, mehr bevorzugt mindestens 1,5 $g/200 cm^3$ und besonders bevorzugt mindestens 2,0 $g/200 cm^3$. Das erfindungsgemäße Filtermaterial hat bevorzugt eine Flammhemmung nach DIN 53438 von mindestens F1 und mindestens K1. Die Auswaschbeständigkeit ist bevorzugt mindestens F1 und mindestens K1.

In einer bevorzugten Ausführungsform der Erfindung hat das erfindungsgemäße Filtermaterial eine Flächenmasse von 60 $g/m^2$ - 250 $g/m^2$, eine Dicke von 0,2 mm - 2,2 mm und eine Luftdurchlässigkeit von 20 $l/m^2s$ - 3000 $l/m^2s$.

**Prüfmethoden**

1) Vor der Bestimmung des Abscheidegrads und der Staubspeicherfähigkeit nach ISO 5011, sowie der Auswaschbeständigkeit und der Flammhemmung nach DIN 53438 werden die Proben 10 Minuten bei 160 °C im Umlufttrockenschrank behandelt (gehärtet) und anschließend 24 Stunden bei 23 °C und 50% relativer Luftfeuchtigkeit klimatisiert.

2) Die Prüfung von Flächenmasse nach DIN EN ISO 536, der Dicke nach DIN EN ISO 534, der Luftdurchlässigkeit nach DIN EN ISO 9237, des Imprägniermittelgehalts und der Porosität erfolgt an nicht gehärteten Proben, die vor der Messung 24 Stunden bei 23 °C und 50% relativer Luftfeuchtigkeit klimatisiert wurden.

**Flächenmasse** nach DIN EN ISO 536

**Dicke** nach DIN EN ISO 534 mit 0,1 bar Auflagedruck

**Luftdurchlässigkeit** nach DIN EN ISO 9237 bei 200 Pa Druckdifferenz

**Abscheidegrad und Staubspeicherfähigkeit** nach ISO 5011, gemessen mit Teststaub Iso fine bei einer Probenfläche von 200 cm$^2$ und einer Anströmgeschwindigkeit von 12 cm/s.

Dem Prüfling wird ein Absolutfilter "Glass-Microfiber-Disc Grade 227" der Firma Munktell abströmseitig nachgeschaltet. Die Bestaubung erfolgt mit einer Staubkonzentration von 1000 mg/m$^3$ und wird abgebrochen, sobald ein Enddruck von 3000 Pa erreicht ist.

Abscheidegrad und Staubspeicherfähigkeit berechnen sich nach folgender Formel:

$$\text{Abscheidegrad in \%} = \frac{(P1 - P0)}{(P1 - P0) + (G1 - G0)} \times 100\ \%$$

$$\text{Staubspeicherfähigkeit in g/200 cm}^3 = (P1-P0) + (G1-G0)$$

mit

P0 = Gewicht des Prüflings vor der Bestaubung
P1 = Gewicht des Prüflings nach der Bestaubung
G0 = Gewicht des Absolutfilters vor der Bestaubung
G1 = Gewicht des Absolutfilters nach der Bestaubung

**Auswaschbeständigkeit**

Zur Bestimmung der Auswaschbeständigkeit des halogen- und borfreien Flammschutzmittels wird das flammgeschützte Filtermaterial 24 h bei 23°C in deionisiertem Wasser eingelagert. Nach anschließender Trocknung bei 110°C und Klimatisierung bei 23°C und 50% r.F. wird die Flammhemmung nach DIN 53438 Teil 2 und 3 bestimmt. Beflammt wird bei einseitig mit Bindemitteln imprägnierten Filtermaterialien die bindemittelfreie Seite, bei durchimprägnierten Filtermaterialien die im bestimmungsgemäßen Gebrauch angeströmte Seite.

**Flammhemmung** nach DIN 53438, Teil 2 und Teil 3. Beflammt wird bei einseitig mit Bindemitteln imprägnierten Filtermaterialien die bindemittelfreie Seite, bei durchimprägnierten Filtermaterialien die im bestimmungsgemäßen Gebrauch angeströmte Seite.

Die **Porosität** ermittelt sich aus der tatsächlichen Dichte des Filtermediums und der durchschnittlichen Dichte der eingesetzten Fasern:

$$\text{Porosität} = (1 - \text{Dichte Filtermedium [g/cm}^3]/ \text{Dichte Fasern [g/cm}^3])*100\%$$

**Der Anteil des Imprägniermittels** in einem Filtermaterial berechnet sich nach der Formel:

$$\text{Imprägniermittelanteil in \%} = (\text{FM Imp./FM Papier}) * 100\%$$

mit FM Imp. = Masse des trockenen Imprägniermittels pro m$^2$ Filtermaterial und

FM Papier = Flächenmasse des imprägnierten Filtermaterials

wobei vor der Bestimmung des Imprägniermittelanteils das Filtermaterial 30 Minuten bei 100 °C in einem Umlufttrockenschrank getrocknet wird.

Beispiel 1 (Vergleich)

Nach dem allgemein bekannten Verfahren zur Papierherstellung wurde in einer Papiermaschine eine Materialbahn aus 100 % Zellulose erzeugt. Dieses Filtermaterial hatte eine Flächenmasse von 100 g/m$^2$, eine Dicke von 0,47 mm und eine Luftdurchlässigkeit von 170 l/m$^2$s. In einem getrennten Arbeitsschritt wurde dieses Filtermaterial mit einem Imprägniermittel aus einer wässrigen Acrylatdispersion und einem halogen- und borfreien Flammschutzmittel vollständig durchimprägniert. Nach dem Trocknen hatte das Filtermaterial eine Flächenmasse von 134 g/m$^2$, eine Dicke von 0,48 mm, eine Luftdurchlässigkeit von 150 1/m$^2$s und einen Harzgehalt von 25 %. Dieses Filtermaterial ist unter der Bezeichnung L4-2i25HPF bei der Firma Neenah Gessner GmbH, Bruckmühl erhältlich. Das Filtermaterial wurde anschließend 10 Minuten bei 160°C gehärtet. An dem gehärteten Filtermaterial wurde dann die Flammhemmung vor und nach Auswaschtest, der Abscheidegrad und die Staubspeicherfähigkeit bestimmt. Vor den Prüfungen wurde das gehärtete Filtermaterial 24 Stunden bei 23°C und 50% relativer Luftfeuchtigkeit klimatisiert. Die Ergebnisse sind in Tabelle 1 zusammengefasst.

Beispiel 2 (Vergleich)

Die Materialbahn aus Beispiel 1 wurde mit dem gleichen Imprägniermittel und Flammschutzmittel wie in Beispiel 1 imprägniert, nur mit dem Unterschied, dass das Imprägniermittel und das Flammschutzmittel diesmal nur einseitig mittels Walzenauftrag auf die Siebseite des Filtermaterials aufgebracht wurden. Nach dem Trocknen hatte das Papier eine Flächenmasse von 134 g/m$^2$, eine Dicke von 0,51 mm, eine Luftdurchlässigkeit von 164 1/m$^2$s und einen Harzgehalt von 25 %. Das Filtermaterial wurde anschließend 10 Minuten bei 160°C gehärtet. An dem gehärteten Filtermaterial wurden dann die Flammhemmung vor und nach Auswaschtest, der Abscheidegrad und die Staubspeicherfähigkeit bestimmt. Vor den Prüfungen wurde das gehärtete Filtermaterial 24 Stunden bei 23°C und 50% relativer Luftfeuchtigkeit klimatisiert. Die Ergebnisse sind in Tabelle 1 zusammengefasst.

Beispiel 3 (Erfindung)

Auf die nicht imprägnierte, im wesentlichen harzfreie Seite des einseitig imprägnierten Filtermaterials aus Beispiel 2 wurde ein erfindungsgemäßes, halogen- und borfreies Flammschutzmittel bestehend aus einer Lösung aus 12 g Hydroxymethylharnstoff und 27 g Triphenylphosphat in 100 g Methanol aufgesprüht und getrocknet. Nach dem Trocknen hatte das Filtermaterial eine Flächenmasse von 144 g/m$^2$, eine Dicke von 0,51 mm, eine Luftdurchlässigkeit von 162 l/m$^2$s. Das Auftragsgewicht der getrockneten Flammschutzbeschichtung betrug 10 g/m$^2$. Anschließend wurde das Filtermaterial noch 10 Minuten bei 160 °C gehärtet, um eine Bindung des Flammschutzmittels mit der Faseroberfläche zu erzielen. An dem gehärteten Filtermaterial wurde dann die Flammhemmung vor und nach Auswaschtest, der Abscheidegrad und die Staubspeicherfähigkeit bestimmt. Vor den Prüfungen wurde das gehärtete Filtermaterial 24 Stunden bei 23°C und 50% relativer Luftfeuchtigkeit klimatisiert. Die Ergebnisse sind in Tabelle 1 zusammengefasst.

Tabelle 1

|  | Beispiel 1 (Vergleich) | Beispiel 2 (Vergleich) | Beispiel 3 (Erfindung) |
|---|---|---|---|
| Abscheidegrad | 99,93 % | 99,84 % | 99,86 % |
| Staubspeicherfähigkeit | 1,86 g/200 cm$^3$ | 2,57 g/200 cm$^3$ | 2,50 g/200 cm$^3$ |
| Flammhemmung | F1/K1 | keine | F1/K1 |
| Auswaschbeständigkeit | F1/K1 | keine | F1/K1 |

Wie aus Tabelle 1 zu entnehmen ist, wird mit dem erfindungsgemäßen Filtermaterial (Beispiel 3) die gleiche Flammhemmung erreicht, wie mit dem Filtermaterial nach dem bisherigen Stand der Technik (Beispiel 1). Der Vorteil des erfindungsgemäßen Filtermaterials liegt in einer deutlich höheren Standzeit bei gleichem Abscheidegrad, verglichen mit Beispiel 1. Aus dem Vergleich von Beispiel 2 und 3 ist weiterhin zu ersehen, dass das erfindungsgemäße Filtermaterial auch nach Aufsprühen des Flammschutzmittels die gute Staubspeicherfähigkeit des einseitig imprägnierten Filtermaterials (Beispiel 2) behält und dabei eine flammhemmende Wirkung besitzt.

**Patentansprüche**

1. Einseitig mit Bindemittel imprägniertes Filtermaterial, insbesondere für die Gasfiltration, **dadurch gekennzeichnet, dass** das Filtermaterial eine nicht mit Bindemittel imprägnierte Seite umfasst, die ein halogen- und borfreies Flammschutzmittel enthält.

2. Filtermaterial nach Anspruch 1 **dadurch gekennzeichnet, dass** das halogen- und borfreie Flammschutzmittel an die im Filtermaterial enthaltenen Fasern gebunden ist.

3. Filtermaterial nach Anspruch 1 oder 2 **dadurch gekennzeichnet, dass** das halogen- und borfreie Flammschutzmittel in Wasser schwer löslich ist.

4. Filtermaterial nach Anspruch 2 **dadurch gekennzeichnet, dass** das halogen- und borfreie Flammschutzmittel zumindest eine stickstoffhaltige Komponente und optional eine phosphorhaltige Komponente umfasst, wobei die stickstoffhaltige Komponente an die Fasern gebunden ist.

5. Filtermaterial nach einem der vorhergehenden Ansprüche **dadurch gekennzeichnet, dass** das Filtermaterial zumindest ein Material ausgewählt aus der Gruppe bestehend aus nassgelegten Vliesen, trockengelegten Vliesen und Schäumen umfasst.

6. Filtermaterial nach einem der vorhergehenden Ansprüche **dadurch gekennzeichnet, dass** das Bindemittel zumindest ein Vertreter aus der Gruppe bestehend aus Phenolharz und Epoxidharz, Melaminharz, Harnstoffharz und thermoplastisches Polymer enthält.

7. Filtermaterial nach einem der vorhergehenden Ansprüche **dadurch gekennzeichnet, dass** das Bindemittel ein halogen- und borfreies Flammschutzmittel enthält.

8. Filtermaterial nach einem der vorhergehenden Ansprüche **dadurch gekennzeichnet, dass** das Filtermaterial eine Flächenmasse von 60 g/m$^2$ - 250 g/m$^2$ besitzt.

9. Filtermaterial nach einem der vorhergehenden Ansprüche **dadurch gekennzeichnet, dass** das Filtermaterial eine Dicke von 0,2 mm - 2,2 mm besitzt.

10. Filtermaterial nach einem der vorhergehenden Ansprüche **dadurch gekennzeichnet, dass** das Filtermaterial eine Luftdurchlässigkeit von 50 l/m$^2$s - 3000 1/m$^2$s besitzt.

11. Filtermaterial nach einem der vorhergehenden Ansprüche **dadurch gekennzeichnet, dass** das Filtermaterial eine flammhemmende Wirkung nach DIN 53438 von mindestens K1 und mindestens F1 besitzt.

12. Filtermaterial nach einem der vorhergehenden Ansprüche **dadurch gekennzeichnet, dass** das Filtermaterial eine Auswaschbeständigkeit nach DIN 53438 von mindestens K1 und mindestens F1 besitzt.

13. Filtermaterial nach einem der vorhergehenden Ansprüche **dadurch gekennzeichnet, dass** das Filtermaterial auf der Anströmseite eine Vorfilterlage besitzt.

14. Filtermaterial nach Anspruch 13 **dadurch gekennzeichnet, dass** die Vorfilterlage ein Meltblownvlies, ein Spinnvlies, ein trockengelegtes Stapelfaservlies, ein nassgelegtes Vlies, ein Glasfaservlies, ein Gewebe oder einen Schaum umfasst.

15. Filterelement umfassend ein Filtermaterial gemäß einem der vorhergehenden Ansprüche.

**Claims**

1. Filter material impregnated on one side with binder, in particular for gas filtration, **characterised in that** the filter material comprises one side not impregnated with binder which contains a halogen-free and boron-free flame retardant.

2. Filter material according to claim 1, **characterised in that** the halogen-free and boron-free flame retardant is bound to the fibres present in the filter material.

3. Filter material according to claim 1 or 2, **characterised in that** the halogen-free and boron-free flame retardant has poor solubility in water.

4. Filter material according to claim 2, **characterised in that** the halogen-free and boron-free flame retardant comprises at least one nitrogen-containing component and optionally one phosphorus-containing component, wherein the nitrogen-containing component is bound to the fibres.

5. Filter material according to one of the preceding claims, **characterised in that** the filter material comprises at least one material selected from the group consisting of wet-laid nonwovens, dry-laid nonwovens and foams.

6. Filter material according to one of the preceding claims, **characterised in that** the binder contains at least one representative from the group consisting of phenolic resin and epoxy resin, melamine resin, urea-formaldehyde resin and thermoplastic polymer.

7. Filter material according to one of the preceding claims, **characterised in that** the binder contains a halogen-free and boron-free flame retardant.

8. Filter material according to one of the preceding claims, **characterised in that** the filter material has a grammage of 60 g/m$^2$ - 250 g/m$^2$.

9. Filter material according to one of the preceding claims, **characterised in that** the filter material has a thickness of 0.2 mm - 2.2 mm.

10. Filter material according to one of the preceding claims, **characterised in that** the filter material has an air permeability of 50l/m$^2$s - 3,000l/m$^2$s.

11. Filter material according to one of the preceding claims, **characterised in that** the filter material has a fire-retardant effect according to DIN 53 438 of at least K1 and at least F1.

12. Filter material according to one of the preceding claims, **characterised in that** the filter material has a wash-out resistance according to DIN 53 438 of at least K1 and at least F1.

13. Filter material according to one of the preceding claims, **characterised in that** the filter material has a pre-filter layer on the inflow side.

14. Filter material according to claim 13, **characterised in that** the pre-filter layer comprises a melt-blown nonwoven, a spun-bonded nonwoven, a dry-laid staple fibre nonwoven, a wet-laid nonwoven, a glass-fibre nonwoven, a fabric or a foam.

15. Filter element comprising a filter material according to one of the preceding claims.

## Revendications

1. Matériau filtrant imprégné d'un côté d'un liant, destiné en particulier à la filtration de gaz, **caractérisé en ce que** le matériau filtrant comprend un côté qui n'est pas imprégné d'un liant, lequel contient un retardateur de flammes sans halogène et sans bore.

2. Matériau filtrant selon la revendication 1, **caractérisé en ce que** le retardateur de flammes sans halogène et sans bore est lié aux fibres contenues dans le matériau filtrant.

3. Matériau filtrant selon la revendication 1 ou 2, **caractérisé en ce que** le retardateur de flammes sans halogène et sans bore est peu soluble dans l'eau.

4. Matériau filtrant selon la revendication 2, **caractérisé en ce que** le retardateur de flammes sans halogène et sans bore comprend au moins un composant contenant de l'azote et, en option, un composant contenant du phosphore, le composant contenant de l'azote étant lié aux fibres.

5. Matériau filtrant selon l'une quelconque des revendications précédentes, **caractérisé en ce que** le matériau filtrant comprend au moins un matériau choisi parmi le groupe constitué de non-tissés voie humide, de non-tissés voie sèche et de mousses.

6. Matériau filtrant selon l'une quelconque des revendications précédentes, **caractérisées en ce que** le liant contient au moins un représentant issu du groupe constitué d'une résine phénolique et d'une résine époxy, d'une résine de mélamine, d'une résine d'urée et d'un polymère thermoplastique.

7. Matériau filtrant selon l'une quelconque des revendications précédentes, **caractérisé en ce que** le liant contient un retardateur de flammes sans halogène et sans bore.

8. Matériau filtrant selon l'une quelconque des revendications précédentes, **caractérisé en ce que** le matériau filtrant possède une masse surfacique de 60 g/m$^2$ à 250 g/m$^2$.

9. Matériau filtrant selon l'une quelconque des revendications précédentes, **caractérisé en ce que** le matériau filtrant possède une épaisseur de 0,2 mm à 2,2 mm.

10. Matériau filtrant selon l'une quelconque des revendications précédentes, **caractérisé en ce que** le matériau filtrant possède une perméabilité à l'air de 50 1/m$^2$s à 3 000 l/m$^2$s.

11. Matériau filtrant selon l'une quelconque des revendications précédentes, **caractérisé en ce que** le matériau filtrant possède une action retardatrice de flammes selon la norme DIN 53438 d'au moins Kl et d'au moins F1.

12. Matériau filtrant selon l'une quelconque des revendications précédentes, **caractérisé en ce que** le matériau filtrant possède une résistance au lavage selon la norme DIN 53438 d'au moins Kl et d'au moins F1.

13. Matériau filtrant selon l'une quelconque des revendications précédentes, **caractérisé en ce que** le matériau filtrant possède, sur le côté du flux entrant, une couche pré-filtrante.

14. Matériau filtrant selon la revendication 13, **caractérisé en ce que** la couche pré-filtrante comprend un non-tissé soufflé en fusion, un filé-lié, un non-tissé en fibres discontinues voie sèche, un non-tissé voie humide, un non-tissé en fibres de verre, un tissu ou une mousse.

15. Elément filtrant comprenant un matériau filtrant selon l'une quelconque des revendications précédentes.

**EP 2 916 928 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1406431 A
- DE 19752143 A1
- US 20080022645 A1
- DE 2723528 A1
- US 4340563 A
- US 3802817 A
- US 3855046 A
- US 3692618 A
- US 3171820 A
- DE 1504551 A
- DE 601435 A
- GB 1111928 A

**In der Beschreibung aufgeführte Nicht-Patentliteratur**

- **VAN A. WENTE.** Superfine Themoplastic Fibers. *Industrial Engineering Chemistry,* vol. 48, 1342-1346